# EUROPÄISCHE PATENTSCHRIFT

(11) **EP 4 444 449 B1**
(45) Veröffentlichungstag und Bekanntmachung des Hinweises auf die Patenterteilung: **19.03.2025**
(21) Anmeldenummer: 24700708.1
(22) Anmeldetag: 10.01.2024
(51) Int. Cl.: B01D 53/62, C04B 7/36, F17C 5/06

(54) **MODULARES SYSTEM ZUR KOHLENDIOXIDABTRENNUNG, -LAGERUNG UND -TRANSPORT**
MODULAR SYSTEM FOR SEPARATING OUT, STORING AND TRANSPORTING CARBON DIOXIDE
SYSTÈME MODULAIRE POUR SÉPARER, STOCKER ET TRANSPORTER DU DIOXYDE DE CARBONE

(30) Priorität: 19.01.2023 DE 102023101316; 19.01.2023 LU 103060
(43) Veröffentlichungstag der Anmeldung: 16.10.2024
(73) Patentinhaber: thyssenkrupp Polysius GmbH, 59269 Beckum (DE); thyssenkrupp AG, 45143 Essen (DE)
(72) Erfinder: LAMPE, Karl, 59320 Ennigerloh (DE); LOCHER, Georg, 59302 Oelde (DE); WILLMS, Eike, 44309 Dortmund (DE); LEMKE, Jost, 59320 Ennigerloh (DE); BECKER, Daniel, 44139 Beckum (DE)
(74) Vertreter: thyssenkrupp Intellectual Property GmbH
(86) Internationale Anmeldenummer: PCT/EP2024/050417
(87) Internationale Veröffentlichungsnummer: WO 2024/153500

(56) Entgegenhaltungen:
- WO-A1-2011/139787
- WO-A1-2022/187336
- WO-A1-2022/261686
- JP-A- 2017 032 004
- US-A1- 2020 016 535
- GAMBORG FILIP: "Technology Data Carbon Capture, transport and storage", 1 November 2021 (2021-11-01), XP093068547, Retrieved from the Internet <URL:https://ens.dk/sites/ens.dk/files/Analyser/technology_data_for_carbon_capture_transport_and_storage.pdf> [retrieved on 20230728]
- ASCO CARBON DIOXIDE LTD: "ASCO 20' ISO Tank Containers", 1 January 2021 (2021-01-01), XP093068543, Retrieved from the Internet <URL:https://www.ascoco2.com/fileadmin/PDF_Download/PDF_Produkte/PDF_CO2_und_Trockeneis_Zubehoer/CO2_Lagerung/en/ASCO_20_ISO_Tank_Containers.pdf> [retrieved on 20230728]
- ASCO CARBON DIOXIDE LTD: "ASCO Transportable CO2 Tanks / ASCO CO2 Semi Trailers", 1 January 2021 (2021-01-01), XP093068541, Retrieved from the Internet <URL:https://www.ascoco2.com/fileadmin/PDF_Download/PDF_Produkte/PDF_CO2_und_Trockeneis_Zubehoer/CO2_Lagerung/en/ASCO_Transportable_CO2_Tanks.pdf> [retrieved on 20230728]
- BECCARI BARRETO BEATRIZ ET AL: "Carbon dioxide submarine storage in glass containers: Life Cycle Assessment and cost analysis of four case studies in the cement sector", MITIGATION AND ADAPTATION STRATEGIES FOR GLOBAL CHANGE, SPRINGER NETHERLANDS, DORDRECHT, vol. 25, no. 2, 2 March 2019 (2019-03-02), pages 165 - 183, XP037144047, ISSN: 1381-2386, [retrieved on 20190302], DOI: 10.1007/S11027-019-09853-W

## Beschreibung

Die Erfindung betrifft eine Zementanlage mit einer Kohlendioxidseparationsvorrrichtung zur Abtrennung von Kohlendioxid aus dem Abgas.

Um der menschgemachten Klimaerwärmung entgegenzuwirken, muss die Emission von Kohlendioxid reduziert werden. Eine Möglichkeit ist es, Kohlendioxid aus dem Abgas abzutrennen, wofür es verschiedene Verfahren gibt. Eines der Verfahren ist ein Calciumcarbonat-Kreislauf, auch Carbonate-Looping oder Calcium-Looping genannt. Andere Verfahren verwenden Aminwäsche-Lösungen, wieder andere arbeiten kryotechnisch, wieder andere mit Membranen zur selektiven Trennung von Gasen.

Das Carbonate-Looping-Verfahren (CaL-Prozess) nutzt aus, dass Kohlendioxid an Calciumoxid, Magnesiumoxid oder anderen Mineraloxiden, die aus der Calcinierung von Carbonaten resultieren, angelagert werden kann. Dieses erfolgt in einem von dem zu reinigenden Abgas durchströmten Carbonator, beispielsweise bei etwa 650 °C. Dann wird das entstehende Calciumcarbonat (meist als Gemisch mit Calciumoxid) in einen Calcinator überführt, wo bei beispielsweise 950 °C das Kohlendioxid wieder entfernt wird. Die erforderliche Wärmezufuhr für den Calcinationsprozess erfolgt beispielsweise und bevorzugt durch Zuführung von Brennstoff und reinem Sauerstoff. Alternativ kann auch eine indirekte Wärmezufuhr in den Calcinator erfolgen. Das so erzeugte Oxid, beispielsweise Calciumoxid, gegebenfalls mit Restanteilen Calciumcarbonat, wird in den Carbonator zurückgeführt (und somit im Kreislauf geführt). Vorteil ist, dass der Abgasstrom des Calcinators im Carbonate-Looping-Verfahren unter beispielsweise Oxyfuel-Bedingungen oder bei indirekter Erwärmung praktisch reines Kohlendioxid erzeugt. Auf diese Weise kann das Kohlendioxid aus dem Abgasstrom der Prozessanlage, welcher keine größeren Anteile von Stickstoff oder andere störende Gaskompenenten enthält, mit einer hohen Konzentration vom Staub und Wasserdampf getrennt werden. Somit kann auf eine zusätzliche Reinigung oder Trennung verzichtet werden, die sich an den Carbonate-Looping-Prozess anschließen würde.

Das Carbonate-Looping-Verfahren ist bekannt. Das Verfahren ist dem Fachmann bekannt, wobei das Wissen des Fachmanns beispielsweise durch die folgenden Dokumente dokumentiert ist: ITMI 20120383 A1, ITMI 20120382 A1, US 2012 175136 A1, WO 2020 193410 A1, US 2009 169452 A1, EP 3594597 A1, US 2018 028967 A1, US 2014 161696 A1, US 2009 101050 A1, WO 2006 113673 A2, FR 2921059 A1, US 2018 320481 A1, US 2012 141354 A1, US 2013 164202 A1 und WO 2013 024339 A1. Dieses stellt jedoch nur einen Ausschnitt des Standes der Technik dar.

Aus der Gamborg Filip: "Technology Data Carbon Capture, transport and storage", 1. November 2021 (2021-11-01), XP093068547, Gefunden im Internet: URL:https://ens.dk/sites/ens.dk/files/Analyser/ technology_data_for_carbon capture_transport_and_storage.pdf[gefunden am 2023-07-28], der Asco Carbon Dioxide Ltd: "ASCO 20' ISO Tank Containers", , 1. Januar 2021 (2021-01-01), XP093068543, Gefunden im Internet: URL:https://www.ascoco2.com/fileadmin/PDF_Download/ PDF_Produkte/PDF_CO2_und_Trockeneis_Zubehoer/ CO2_Lagerung/en/ASCO 20_ISO_Tank_Containers.pdf [gefunden am 2023-07-28] und der Asco Carbon Dioxide Ltd: "ASCO Transportable CO2 Tanks / ASCO CO2 Semi Trailers", 1. Januar 2021 (2021-01-01), XP093068541, Gefunden im Internet: URL:https://www.ascoco2.com/fileadrin/PDF_Download/ PDFProdukte/PDF_CO2_und_Trockeneis_Zubehoer/ CO2_Lagerung/en/ASCO_Transportable_CO2_Tanks.pdf [gefunden am 2023-07-28] sind weitere Informationen Zur Kohlendioxidabtrennung beziehungsweise Lagerung und Transport bekannt.

Üblicherweise kann das mittels dem Carbonate-Looping-Prozess abgetrennte Kohlendioxid nicht innerhalb des Zementwerks verbraucht oder umgesetzt werden. Auf der anderen Seite besteht aber der Bedarf, bestehende Anlagen entsprechend mit einer CO₂-Abscheidetechnik nachzurüsten, um den Anforderung einer nachhaltigen klimaneutralen Produktion gerecht zu werden. Somit besteht die Herausforderung, das unvermeidbar erzeugte Kohlendioxid, das insbesondere aus der Calcinierung des Rohmaterials resultiert, zu lagern und abzutransportieren.

Aufgabe der Erfindung ist es daher, Zwischen- oder End-Lagervorrichtungen für Kohlendioxid bereitzustellen, welche eine Nachrüstbarkeit bestehender Zementwerke mit einer Kohlendioxidabtrennung und nachfolgender Speicherung ermöglicht.

Gelöst wird diese Aufgabe durch Zementanlage mit den in Anspruch 1 angegebenen Merkmalen. Vorteilhafte Weiterbildungen ergeben sich aus den Unteransprüchen, der nachfolgenden Beschreibung sowie den Zeichnungen.

Die erfindungsgemäße Zementanlage weist eine Kohlendioxidseparationsvorrrichtung zur Abscheidung von Kohlendioxid aus dem Abgas auf. Hierbei scheidet die Kohlendioxidseparationsvorrrichtung das Kohlendioxid üblicherweise nicht völlig ab, sondern entfernt den größten Anteil in einer wirtschaftlich und ökologisch sinnvollen Weise. Die Kohlendioxidseparationsvorrrichtung weist üblicherweise eine Vorrichtung zur Aufreinigung des abgetrennten Kohlendioxids auf oder kann aus dieser bestehen. Hierbei kann die erforderliche Reinheit sehr stark von der weiteren Verwendung des Kohlendioxids abhängen. Daher ist die Vorrichtung zur Aufreinigung des abgetrennten Kohlendioxids vorzugsweise in verschiedenen Betriebsmodi zur Erzielung unterschiedlicher Reinheiten von Kohlendioxid zu betreiben. Insbesondere wird hier zwischen der Verwendung in Lebensmitteln (besonders rein), für technische Zwecke und zur Endlagerung (niedrigste Reinheitsanforderung) unterschieden. In jedem Fall ist es sinnvoll, eine Reinheit anzustreben, die die Verdichtung und Verflüssigung des abgetrennten CO₂ ermöglich. Die Zementanlage weist ein Kohlendioxidspeichersystem auf. Die Kohlendioxidseparationsvorrrichtung ist mit dem Kohlendioxidspeichersystem zur Überführung des abgeschiedenen Kohlendioxids verbunden. Erfindungsgemäß ist Kohlendioxidspeichersystem modular aus einer Mehrzahl an transportfähigen Kohlendioxidbehältern aufgebaut. Dieser Aufbau hat Vorteile gegenüber einer festen Installation entsprechender Speicherkapazität. Zum einen ist es dadurch vergleichsweise einfach, die Anlage nachträglich zu installieren, insbesondere auch nicht direkt zusammenhängenden Raum effizient zu nutzen. Des Weiteren kann hierdurch auch flexibel auf sich ändernde Marktanforderungen reagiert werden, wenn beispielsweise Kohlendioxid in unterschiedlichen Reinheiten hergestellt wird. Durch die Verwendung von transportfähigen Kohlendioxidbehältern ist eine schnelle und einfache Anpassung an die vom Markt geforderten Mengenverhältnisse möglich. Dadurch müssen im Gegensatz zu festen Speichervorrichtungen nicht unnötig große Speichervorrichtungen vorgehalten werden. Des Weiteren kann dadurch der Abtransport in einfacher und flexibler Weise erfolgen. Dem gegenüber steht eine im Vergleich höhere Investition in die transportfähigen Kohlendioxidbehälter, sowie ein Aufwand für das Be- und Entladen der transportfähigen Kohlendioxidbehälter für den Abtransport des Kohlendioxids.

Wesentlich ist, dass die transportfähigen Kohlendioxidbehälter durch die Verbindung jeweils temporär Bestandteil der Gesamtanlage werden. Durch den modularen Aufbau ist dennoch eine flexible Speicherkapazität möglich. Der Transport der Behälter kann den Möglichkeiten der Logistik angepasst werden. Gleichzeitig ist ein besonders effizienter Abtransport durch die Verwendung von transportfähigen Kohlendioxidbehältern möglich. Aufwände für Umpumpen oder dabei entstehende Wärme, welche beispielsweise zu Verdampfung führt, werden vermieden.

Durch das Zusammenschalten mehrerer transportfähiger Kohlendioxidbehälter ist eine Kapazitätsanpassung in einfacher Weise an verschiedenen Orten möglich. Auf diese Weise kann sowohl am Ort der Entstehung, während des Transports, am Ort des Abnehmers flexible Kapazitäten geschaffen werden. Ebenso muss für den Transport nicht auf eine speziell zu errichtende Infrastruktur, beispielsweise eine Pipeline, zurückgegriffen werden, sodass hier Ressourcen eingespart werden können. Dieses betrifft neben dem Speichervolumen auch den Kohlendioxidstrom. Dadurch kann auch auf die wechselnden Mengen bei schwankenden Produktionsbedingungen im Zementwerk Rücksicht genommen werden, so dass die weiterverarbeitenden Anlagenteile, zum Beispiel die CO₂-Verflüssigungsanlage, immer mit gleichen Mengen versorgt werden kann.

In einer weiteren Ausführungsform der Erfindung sind alle transportfähigen Kohlendioxidbehälter in gleicher Weise standardisiert.

In einer weiteren Ausführungsform der Erfindung entsprechen die transportfähigen Kohlendioxidbehälter der ISO 668. Hieraus ergeben sich eine große Anzahl an Vorteilen. Zum einen sind diese standardisierten Container leicht verfügbar, gut stapelbar, einfach zu Verladen und sowohl auf der Straße, der Schiene als auch auf dem Wasser sehr gut zu transportieren. Durch die Standardisierung ergibt sich auch eine extrem hohe Austauschbarkeit, sodass ein leichter Austausch erfolgen kann. Weiter sind diese Container auch für den Transport von verschiedenen Reinheiten des Kohlendioxids bereist verfügbar. Auch ist je nach Marktanforderung schnell eine Verschiebung der Lager- und Transportkapazitäten in Anpassung an den Marktbedarf möglich. Auch wird durch die für die Handhabung, insbesondere Transport- Verlade- und Entladevorgänge, vorhandenen Hilfsgeräte die Handhabung vereinfacht. Des Weiteren ermöglicht die einfache Verfügbarkeit am Markt den Aufbau, sodass eine schnelle Umsetzung im Rahmen einer Modernisierung möglich ist. Hierbei wird im Sinne der ISO 668 auch jede analoge Einheit verstanden, beispielsweise ein 10-Fuß-Container oder ISO 668 Container mit zusätzlich angeordneten Kühlaggregat.

Erfindungsgemäß sind die transportfähigen Kohlendioxidbehälter einzeln oder gruppenweise trennbar mit der Kohlendioxidseparationsvorrrichtung verbindbar. Insbesondere die gruppenweise Anordnung ermöglicht eine direkte Anpassung an die Produktionskapazität der Kohlendioxidseparationsvorrrichtung. Die transportfähigen Kohlendioxidbehälter haben aufgrund der Größe und der Normierung üblicherweise eine deutlich begrenzten maximale Befüllgeschwindigkeit, können also nur einen begrenzten Kohlendioxidstrom aufnehmen. Durch die Anordnung in Gruppen kann so der durch die Kohlendioxidseparationsvorrrichtung erzeugte Kohlendioxidstrom aufgeteilt werden und so für jeden einzelnen transportfähigen Kohlendioxidbehälter die maximale Befüllgeschwindigkeit unterschritten werden.

Erfindungsgemäß sind die transportfähigen Kohlendioxidbehälter in Gruppen von 3 bis 10 transportfähigen Kohlendioxidbehältern zusammengefasst. Diese sind zusammen geschaltet, sodass sich der Zustrom des Kohlendioxids aus der Kohlendioxidseparationsvorrrichtung auf die transportfähigen Kohlendioxidbehälter verteilt. Zusätzlich können auch mehrere Gruppen von transportfähigen Kohlendioxidbehältern gleichzeitig mit der Kohlendioxidseparationsvorrrichtung verbunden und gleichzeitig befüllt werden.

In einer weiteren Ausführungsform der Erfindung weist die Zementanlage einen ersten Lagerbereich für gefüllte transportfähige Kohlendioxidbehältern auf. Weiter weist die Zementanlage einen zweiten Lagerbereich für leere transportfähige Kohlendioxidbehältern auf. Des Weiteren weist die Zementanlage einen Befüllbereich auf. Im Befüllbereich sind die transportfähigen Kohlendioxidbehälter mit der Kohlendioxidseparationsvorrrichtung verbindbar. Durch diese räumliche Trennung und Anordnung ist es insbesondere besonders einfach möglich, Räume in einer bestehenden Zementanlage effizient zu nutzen. Insbesondere bei der Verwendung von ISO 668 Containern ermöglicht die gute Transportierbarkeit und die gute Verfügbarkeit von geeigneten Transportgeräten eine leichte, verteilte Anordnung. Des Weiteren können insbesondere der erste Lagerbereich und der zweite Lagerbereich auch eine gewisse Entfernung aufweisen, sodass platzmäßige Erweiterung auch ohne direkte räumliche Anbindung möglich sein kann.

In einer weiteren Ausführungsform der Erfindung weist das Kohlendioxidspeichersystem einen Reinkohlendioxidbehälter als transportfähigen Kohlendioxidbehälter für einen ersten Reinheitsgrad Kohlendioxid und einen Behälter für technisches Kohlendioxid als transportfähigen Kohlendioxidbehälter für einen zweiten Reinheitsgrad auf. Je höher die Reinheit ist, umso aufwändiger (und energieaufwändiger) ist die Reinigung. Daher wird zwischen technischem Kohlendioxid (geringere Reinheit, ausreichend für die technische Verwendung) und insbesondere Kohlendioxid für die Verwendung im Lebensmittelbereich (besonders hohe Reinheitsanforderungen) unterschieden. Daher werden die Transportbehälter regelmäßig gekennzeichnet, um eine Verunreinigung von zuvor in dem gleichen Behälter transportiertes Material mit geringerer Reinheit zu vermeiden. Daher wird zwischen Behältern für technisches Kohlendioxid und Behältern für Kohlendioxid zur Verwendung im Lebensmittelbereich unterschieden und die Behälter weisen entsprechende Kennzeichnungen auf. Dennoch können die Behälter technisch theoretisch identisch sein, sie unterscheiden sich gegebenfalls nur in der Verwendung und der für die Verwendung angebrachte Kennzeichnung. Die üblicherweise höchste Anforderung besteht für die anschließende Verwendung in der Lebensmittelindustrie, die gleichzeitig einen hohen Bedarf an Kohlendioxid (Kohlensäure) hat. Auf der anderen Seite wird gerade die Einbringung von Kohlendioxid ins Erdreich zur Langzeitspeicherung diskutiert. Hier dient die Reinheitsanforderung der Eignung für eine Verflüssigung. Eine Aufreinigung auf Lebensmittelqualität vor einer Endlagerung ist daher wirtschaftlich und ökologisch sinnlos. Die Verwendung unterschiedlicher transportfähiger Kohlendioxidbehälter ermöglicht hier eine schnelle und variable Anpassung an die Marktsituation, um Beispielsweise den Anteil an Kohlendioxid für die Lebensmittelindustrie zu erhöhen oder zu senken und hierdurch eine rasche Anpassung an Marktpreise und Herstellungskosten zu erreichen.

In einer weiteren Ausführungsform der Erfindung weist die Zementanlage eine Beladestation auf. Die Beladestation ist mit dem Kohlendioxidspeichersystem verbunden. Neben dem Abtransport des Kohlendioxids mittels der transportfähigen Kohlendioxidbehälter kann es zielführend sein, auch weitere Transportmittel zu beladen, beispielsweise, um den lokalen Bedarf, beispielsweise einer Brauerei, abdecken zu können. Hier kann dann insbesondere die Beladung in Transportvorrichtungen erfolgen, die nicht standardisiert sind, oder deren Standard nicht dem der transportfähigen Kohlendioxidbehälter entspricht. Des Weiteren kann die Beladestation beispielsweise eine Beladestation zur Beladung eines Tankschiffes sein.

In einer weiteren Ausführungsform der Erfindung ist das Kohlendioxidspeichersystem mit weiteren Bauteilen zur Klinkerherstellung der Zementanlage zur Überführung von Kohlendioxid verbunden. Das Kohlendioxid kann somit beispielsweise teilweise wieder direkt in einer Produktionsanlage zur Herstellung von zementartigen Bindemitteln eingesetzt werden. Beispielsweise kann dieses in einer Reduktionsvorrichtung einer Anlage zur Herstellung von tonartigen Zementersatzprodukten zwecks Farboptimierung eines beispielsweise Eisen enthaltenden Materials der Fall sein, wo neben reduzierenden Verbindungen, beispielsweise Wasserstoff, Kohlenmonoxid und/oder Kohlenwasserstoffen eben auch Kohlendioxid als Inertgas eingesetzt werden kann.

In einer weiteren Ausführungsform der Erfindung weist die Zementanlage eine Vorrichtung zur Aufarbeitung von Altbeton auf. Eine Vorrichtung zur Aufarbeitung von Altbeton dient dazu, Beton in seine Bestandteile Kies, Sand und Zement zu zerlegen und daraus wieder einen verwertbaren Rohstoff herzustellen. Bisher wird Beton zumeist nur gebrochen und beispielsweise als Sandersatz verwendet. Zunehmend wird aber auch interessant ein echtes Recycling durchzuführen und im letzten Schritt das Zementgestein, das aus dem Altbeton separiert wurde, wieder zu Carbonatisieren. Das daraus resultierende Produkt hat gute Bindeeigenschaften und verbessert die CO₂-Bilanz. Das Kohlendioxidspeichersystem ist dafür mit der Vorrichtung zur Aufarbeitung von Altbeton zur Überführung von Kohlendioxid verbunden. Somit kann das Kohlendioxid genutzt werden, um aus Altbeton wieder ein bindefähiges Zementersatzprodukt zu erzeugen. Das so erzeugte Material wird bevorzugt dem herkömmlichen Zementherstellungsprozess zugeführt, sodass im Endeffekt das Kohlendioxid partiell im Kreislauf geführt wird.

In einem weiteren Aspekt betrifft die Erfindung ein Verfahren zum Betreiben einer erfindungsgemäßen Zementanlage. Das Verfahren weist die folgenden Schritte auf:
a) Verbinden eines ersten transportfähigen Kohlendioxidbehälters mit der Kohlendioxidseparationsvorrrichtung,
b) Befüllen des ersten transportfähigen Kohlendioxidbehälters mit Kohlendioxid,
c) Verbinden eines zweiten transportfähigen Kohlendioxidbehälters mit der Kohlendioxidseparationsvorrrichtung,
d) Trennen der Verbindung zwischen dem ersten transportfähigen Kohlendioxidbehälter mit der Kohlendioxidseparationsvorrrichtung.

Ein wesentlicher Punkt bei einer derartigen modularen Bauweise des Kohlendioxidspeichersystems ist es, dass gerade bei dem modularen Aufbau immer ein Abfluss des Kohlendioxids aus der Kohlendioxidseparationsvorrrichtung sichergestellt ist. Daher ist es zwingend notwendig, dass ein zweiter transportfähiger Kohlendioxidbehälter mit der Kohlendioxidseparationsvorrrichtung verbunden wird, damit der Abfluss des Kohlendioxids gewährleistet ist. Hierdurch ist auch in einem kleinen, modularen Kohlendioxidspeichersystem die Kontinuität der Kohlendioxidspeicherung gewährleistet. Gleichzeitig ist dieses gegenüber einem großen zentralen Lagertank natürlich ein erhöhter Aufwand. Auf der anderen Seite kann auf standardisierte und somit leicht verfügbare und kostengünstiger in größerer Stückzahl hergestellter Komponenten zurückgegriffen werden, was wiederum zu Kostenvorteilen führt.

In einer weiteren Ausführungsform der Erfindung ist der erste transportfähige Kohlendioxidbehälter mit einem dritten transportfähigen Kohlendioxidbehälter verbunden, sodass in Schritt a) auch der dritte transportfähige Kohlendioxidbehälter verbunden wird, in Schritt b) auch der dritte transportfähige Kohlendioxidbehälter befüllt wird und in Schritt d) auch der dritte transportfähige Kohlendioxidbehälter getrennt wird. Der erste transportfähige Kohlendioxidbehälter und der dritte transportfähige Kohlendioxidbehälter sind somit einer gemeinsamen Gruppe zugeordnet. Auch wenn es sich um getrennte transportfähige Kohlendioxidbehälter handelt, so verhalten diese sich zusammengeschaltet quasi wie in einziger, größerer transportfähiger Kohlendioxidbehälter. Der Vorteil ist der, dass somit die für benötigter Aufnahmekapazität an Kohlendioxid in einfacher Wiese die Transportfähigkeit, insbesondere auf Straße und Schiene, gegeben bleibt. Gleichzeitig wird durch den Rückgriff auf verfügbare Komponenten der Aufwand einschließlich der Prüf- und Genehmigungsverfahren reduziert.

In einer weiteren Ausführungsform der Erfindung weist das Verfahren zum Betreiben einer Zementanlage die folgenden Schritte auf:
e) Verbringen eines leeren ersten transportfähigen Kohlendioxidbehälters aus dem zweiten Lagerbereich in den Befüllbereich,
f) Verbinden eines ersten transportfähigen Kohlendioxidbehälters mit der Kohlendioxidseparationsvorrrichtung,
g) Befüllen des ersten transportfähigen Kohlendioxidbehälters mit Kohlendioxids,
h) Trennen der Verbindung zwischen dem ersten transportfähigen Kohlendioxidbehälter mit der Kohlendioxidseparationsvorrrichtung,
i) Verbringen des vollen ersten transportfähigen Kohlendioxidbehälters aus dem Befüllbereich in den ersten Lagerbereich.

Wie bereits ausgeführt, kann durch die entkoppelte Bereitstellung in einem zweiten Lagerbereich und eine Zwischenlagerung vor Abtransport in einem ersten Lagerbereich kann eine gute Integration auch in eine bestehende und räumlich beengte Zementanlage erreicht werden. Insbesondere kann auch durch eine räumliche Trennung von Befüllbereich zu dem ersten Lagerbereich und/oder dem zweiten Lagerbereich eine räumliche Erweiterung einer bestehenden Zementanlage ermöglicht werden.

Besonders bevorzugt ist diese Ausführungsform, wenn die transportfähigen Kohlendioxidbehälter der ISO 668 entsprechen. In diesem Fall kann für Transport, Lagerung und Logistik auf sehr bewährte Systeme zurückgegriffen werden.

In einer weiteren Ausführungsform der Erfindung weisen alle transportfähigen Kohlendioxidbehälter gleiche Außenmaße und standardisierte Verbindungselemente auf.

Der erste Lagerbereich und der zweite Lagerbereich können auch überlappend ausgebildet sein. Wesentlich ist, dass die leeren transportfähigen Kohlendioxidbehälter sowie die vollen transportfähigen Kohlendioxidbehälter selektiv zu zuverlässig entnommen werden können. Dieses kann auch durch ein elektronisches Lagersystem in einem gemeinsamen (sich vollständig überlappenden) Stellbereich für die transportfähigen Kohlendioxidbehälter erfolgen.

Dieses Verfahren ist insbesondere mit den zuvor genannten Verfahrensschritten kombinierbar.

In einer weiteren Ausführungsform der Erfindung weist das Verfahren zum Betreiben einer Zementanlage die folgenden Schritte auf:
j) Verbinden eines Reinkohlendioxidbehälters mit der Kohlendioxidseparationsvorrrichtung und Betreiben der Kohlendioxidseparationsvorrrichtung von reinem Kohlendioxid, geeignet insbesondere für die Lebensmittelindustrie
   oder
k) Verbinden eines Behälters für technisches Kohlendioxid mit der Kohlendioxidseparationsvorrrichtung und Betreiben der Kohlendioxidseparationsvorrrichtung von technischem Kohlendioxid.

Hierbei ist wesentlich, dass zu einem Zeitpunkt beispielsweise reines Kohlendioxid (insbesondere in Lebensmittelqualität, wird als derzeit höchster geforderter Reinheitsgrad mit wirtschaftlicher Bedeutung angesehen) und zu einem anderen Zeitpunkt Kohlendioxid mit einem geringeren Reinheitsgrad hergestellt und damit abgefüllt wird. Beispielsweise kann das technische Kohlendioxid eine Reinheit zwischen 98,5 bis 99,9 % aufweisen. Es sind, insbesondere für die Endverbringung in den Untergrund auch geringere Reinheiten denkbar, solange die Reinheit hinreichend ist für die Verflüssigung und Verdichtung.

Insbesondere werden die Schritte j) und k) in Abhängigkeit der verkaufbaren Mengen und der aktuell erzielbaren Preise (beziehungsweise Transport- und Deponierungskosten) insbesondere in Verbindung mit den für die Aufreinigung des Kohlendioxids verbundenen Kosten ausgewählt. Bei beispielsweise hohen Energiekosten können die Kosten für die Erhöhung der Reinheit die am Markt erzielbaren Kosten so weit übersteigen, dass eine Deponierung mit geringerer Reinheit günstiger wird. Hierdurch wird der Schritt k) gegenüber dem Schritt j) bevorzugt. Bei sinkenden Energiepreisen oder steigender Nachfrage und somit steigendem Preis für reines Kohlendioxid würde der zeitliche Anteil des Schrittes j) entsprechend erhöht.

Dieses Verfahren ist insbesondere mit den zuvor genannten Verfahrensschritten kombinierbar.

In einer weiteren Ausführungsform der Erfindung wird bei dem Verfahren zum Betreiben einer Zementanlage Kohlendioxid aus der Kohlendioxidseparationsvorrrichtung und/oder dem Kohlendioxidspeichersystem zur Beladestation und in der Beladestation in ein Fahrzeug gefördert. Neben dem Abtransport des Kohlendioxids mittels der transportfähigen Kohlendioxidbehälter kann es zielführend sein, auch weitere Transportmittel zu beladen, beispielsweise, um den lokalen Bedarf, beispielsweise einer Brauerei, abdecken zu können. Hier kann dann insbesondere die Beladung in Transportvorrichtungen erfolgen, die nicht standardisiert sind, oder deren Standard nicht dem der transportfähigen Kohlendioxidbehälter entspricht. Des Weiteren kann die Beladestation beispielsweise eine Beladestation zur Beladung eines Tankschiffes oder die Einspeisestelle in eine Pipeline sein.

Dieses Verfahren ist insbesondere mit den zuvor genannten Verfahrensschritten kombinierbar.

In einer weiteren Ausführungsform der Erfindung werden gefüllte transportfähige Kohlendioxidbehälter auf Lastkraftwagen, Zug und/oder Schiff verladen.

In einer weiteren Ausführungsform der Erfindung wird das Kohlendioxid zur Carbonatisierung von Altbeton genutzt. Eine Vorrichtung zur Aufarbeitung von Altbeton dient dazu, Beton in seine Bestandteile Kies, Sand und Zement zu zerlegen und daraus wieder einen verwertbaren Rohstoff herzustellen. Zunächst wird Zementgestein aus dem Altbeton separiert und dann wird bei der Carbonatisierung ein echtes Recycling dieser Komponente des Altbetons durchzuführen. Der Calcium-Anteil des Altbetons wird mittels Carbonatisierung wieder reaktiv und kann damit wieder zu abbindbaren Klinker umgesetzt werden. Das Kohlendioxidspeichersystem ist dafür mit der Vorrichtung zur Aufarbeitung von Altbeton zur Überführung von Kohlendioxid verbunden, sodass das Kohlendioxid hier als Edukt verwendet wird. Somit kann das Kohlendioxid genutzt werden, um aus Altbeton wieder einen abbindbaren Klinker zu erzeugen. Das so erzeugte Material wird bevorzugt dem herkömmlichen Klinkerprozess zugeführt, sodass im Endeffekt das Kohlendioxid im Kreislauf geführt wird.

Nachfolgend ist die erfindungsgemäße Zementanlage anhand eines in den Zeichnungen dargestellten Ausführungsbeispiels näher erläutert.
Fig. 1 erster Zustand
Fig. 2 zweiter Zustand

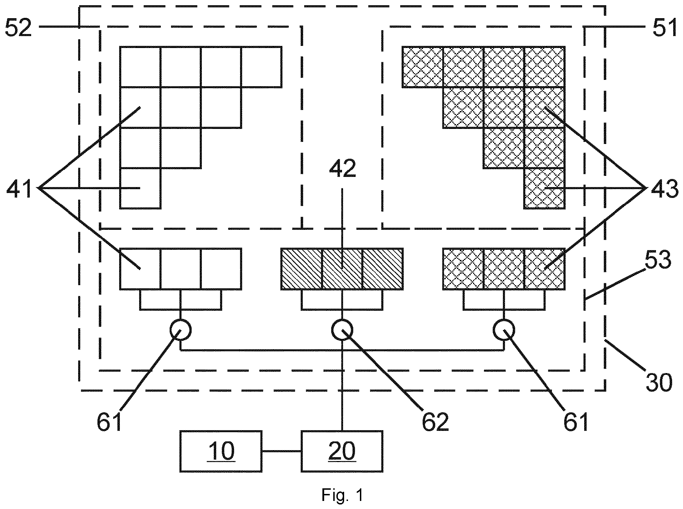

In Fig. 1 ist eine beispielhafte Zementanlage stark schematisiert dargestellt. Die Zementanlage weist einer Klinkerbrennvorrichtung 10 auf. Die Klinkerbrennvorrichtung 10 besteht üblicherweise aus einem Vorwärmer (meist mehrstufig kaskadiert), einem Calcinator, einem Ofen und einem Materialkühler. Hierbei entsteht Kohlendioxid zum einen aus der Verbrennung von Brennstoff, zu einem wesentlichen anderen Teil wird Kohlendioxid beispielsweise aus Kalkstein während des Calcinier-prozesses zu Calciumoxid freigesetzt. Das dort erzeugte Abgas wird einer Kohlendioxidseparationsvorrrichtung 20 zugeführt. Diese ist beispielsweise entsprechend dem Carbonate-Looping-Verfahren ausgeführt. Alternativ kann die Kohlendioxidseparationsvorrrichtung 20 auch eine Aminwäsche als Kohlendioxidabsorber aufweisen, kryotechnisch ausgeführt sein oder nach dem Membrantrennverfahren arbeiten. Das von der Kohlendioxidseparationsvorrrichtung 20 erzeugte Kohlendioxid wird dem Kohlendioxidspeichersystem 30 zugeführt.

Das Kohlendioxidspeichersystem 30 weist drei Bereiche auf, einen ersten Lagerbereich 51, einen zweiten Lagerbereich 52 und einen Befüllbereich 53. Das Kohlendioxidspeichersystem 30 weist eine Vielzahl transportfähiger Kohlendioxidbehälter 41, 42, 43 auf. Hierbei gibt es leere transportfähige Kohlendioxidbehälter 41, halbvolle transportfähige Kohlendioxidbehälter 42 und volle transportfähige Kohlendioxidbehälter 43. Die transportfähigen Kohlendioxidbehälter 41, 42, 43 sind beispielswiese als 40-Fuß-Container nach ISO 668 ausgebildet. Der Befüllbereich 53 weist drei Gruppen von transportfähigen Kohlendioxidbehältern 41, 42, 43 auf. Eine erste Gruppe links weist leere transportfähige Kohlendioxidbehälter 41 auf und ist auf Standby. Eine Gruppe in der Mitte weist halbvolle transportfähige Kohlendioxidbehälter 42 auf und wird gerade befüllt. Die dritte Gruppe rechts weist volle transportfähige Kohlendioxidbehälter 43 auf. Diese können in den ersten Lagerbereich 51 transportiert und durch leere transportfähige Kohlendioxidbehälter41 aus dem zweiten Lagerbereich 52 ersetzt werden. Die Gruppen weisen jeweils beispielhaft drei transportfähige Kohlendioxidbehälter 41, 42, 43 auf. Hierdurch verteilt sich der von der Kohlendioxidseparationsvorrrichtung 20 kommende Strom. Die Gruppen sind mittels Ventilen 61, 62 gemeinsam trennbar und verbindbar mit der Kohlendioxidseparationsvorrrichtung 20 verbunden. Die äußeren Ventile 61 sind geschlossen, das mittlere Ventil 42 ist geöffnet.

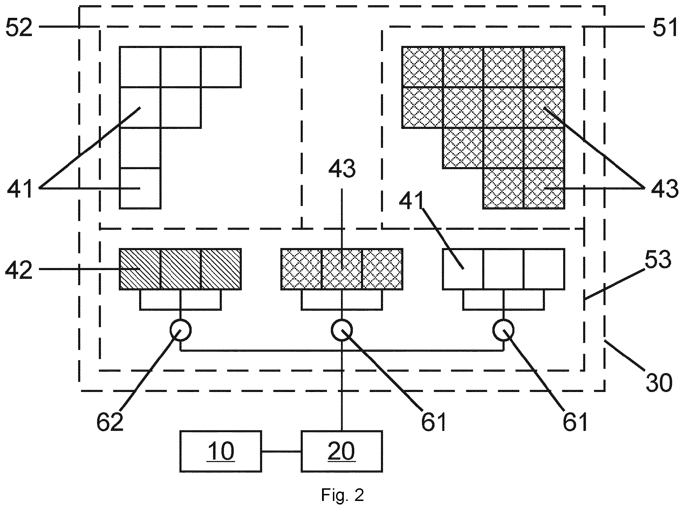

Fig. 2 zeigt die gleiche Zementanlage in einem zweiten Zustand. Die drei vollen transportfähigen Kohlendioxidbehälter 43 aus der rechts dargestellten Gruppe sind in den ersten Lagerbereich 51 verbracht und durch drei leere transportfähige Kohlendioxidbehälter 41 aus dem zweiten Lagerbereich 52 ersetzt worden. Die Befüllung der transportfähige Kohlendioxidbehälter 43 der mittleren Gruppe ist abgeschlossen, sodass diese nun voll sind. Entsprechend wird die bisher auf Standby gehaltene links dargestellte Gruppe nun befüllt, sodass dort halbvolle transportfähige Kohlendioxidbehälter 42 sind. Entsprechend ist das linke Ventil 62 offen, das mittlere und das rechte Ventil 61 geschlossen.

### Bezugszeichen

- 10: Klinkerbrennvorrichtung
- 20: Kohlendioxidseparationsvorrrichtung
- 30: Kohlendioxidspeichersystem
- 41: leerer transportfähiger Kohlendioxidbehälter
- 42: halbvoller transportfähiger Kohlendioxidbehälter
- 43: voller transportfähiger Kohlendioxidbehälter
- 51: erster Lagerbereich
- 52: zweiter Lagerbereich
- 53: Befüllbereich
- 61: geschlossenes Ventil
- 62: offenes Ventil

## Patentansprüche

1. Zementanlage, wobei die Zementanlage eine Kohlendioxidseparationsvorrrichtung (20) zur Abscheidung von Kohlendioxid aus dem Abgas aufweist, wobei die Zementanlage ein Kohlendioxidspeichersystem (30) aufweist, wobei die Kohlendioxidseparationsvorrrichtung (20) mit dem Kohlendioxidspeichersystem (30) zur Überführung des abgeschiedenen Kohlendioxids verbunden ist, wobei das Kohlendioxidspeichersystem (30) modular aus einer Mehrzahl an transportfähigen Kohlendioxidbehältern (41, 42, 43) aufgebaut ist, **dadurch gekennzeichnet, dass** die transportfähigen Kohlendioxidbehälter (41, 42, 43) einzeln oder gruppenweise trennbar mit der Kohlendioxidseparationsvorrrichtung (20) verbindbar sind, wobei die transportfähigen Kohlendioxidbehälter (41, 42, 43) in Gruppen von 3 bis 10 transportfähigen Kohlendioxidbehältern (41, 42, 43) zusammengefasst sind, welche zusammen geschaltet sind.

2. Zementanlage nach Anspruch 1, **dadurch gekennzeichnet, dass** die transportfähigen Kohlendioxidbehälter (41, 42, 43) der ISO 668 entsprechen.

3. Zementanlage nach einem der vorstehenden Ansprüche, **dadurch gekennzeichnet, dass** alle transportfähigen Kohlendioxidbehälter (41, 42, 43) gleiche Außenmaße und standardisierte Verbindungselemente aufweisen.

4. Zementanlage nach einem der vorstehenden Ansprüche, **dadurch gekennzeichnet, dass** die Zementanlage einen ersten Lagerbereich (51) für gefüllte transportfähige Kohlendioxidbehältern (43) aufweist, wobei die Zementanlage einen zweiten Lagerbereich (52) für leere transportfähige Kohlendioxidbehältern (41) aufweist, wobei die Zementanlage einen Befüllbereich (53) aufweist, wobei die transportfähigen Kohlendioxidbehälter (41, 42, 43) im Befüllbereich (52) mit der Kohlendioxidseparationsvorrrichtung (20) verbindbar sind.

5. Zementanlage nach einem der vorstehenden Ansprüche, **dadurch gekennzeichnet, dass** das Kohlendioxidspeichersystem (30) einen Reinkohlendioxidbehälter als transportfähigen Kohlendioxidbehälter (41, 42, 43) für einen ersten Reinheitsgrad Kohlendioxid und einen Behälter für technisches Kohlendioxid als transportfähigen Kohlendioxidbehälter (41, 42, 43) für einen zweiten Reinheitsgrad Kohlendioxid aufweist.

6. Zementanlage nach einem der vorstehenden Ansprüche, **dadurch gekennzeichnet, dass** die Zementanlage eine Beladestation aufweist, wobei die Beladestation mit dem Kohlendioxidspeichersystem (30) verbunden ist.

7. Zementanlage nach einem der vorstehenden Ansprüche, **dadurch gekennzeichnet, dass** das Kohlendioxidspeichersystem (30) mit weiteren Bauteilen zur Klinkerherstellung der Zementanlage zur Überführung von Kohlendioxid verbunden ist.

8. Zementanlage nach einem der vorstehenden Ansprüche, **dadurch gekennzeichnet, dass** die Zementanlage eine Vorrichtung zur Aufarbeitung von Altbeton aufweist, wobei das Kohlendioxidspeichersystem (30) mit der Vorrichtung zur Aufarbeitung von Altbeton zur Überführung von Kohlendioxid verbunden ist.

9. Verfahren zum Betreiben einer Zementanlage nach einem der vorstehenden Ansprüche, wobei das Verfahren die folgenden Schritte aufweist:
a) Verbinden eines ersten transportfähigen Kohlendioxidbehälters (41, 42, 43) mit der Kohlendioxidseparationsvorrrichtung (20),
b) Befüllen des ersten transportfähigen Kohlendioxidbehälters (41, 42, 43) mit Kohlendioxids,
c) Verbinden eines zweiten transportfähigen Kohlendioxidbehälters (41, 42, 43) mit der Kohlendioxidseparationsvorrrichtung (20),
d) Trennen der Verbindung zwischen dem ersten transportfähigen Kohlendioxidbehälter (41, 42, 43) mit der Kohlendioxidseparationsvorrrichtung (20).

10. Verfahren nach Anspruch 9, **dadurch gekennzeichnet, dass** der erste transportfähige Kohlendioxidbehälter (41, 42, 43) mit einem dritten transportfähigen Kohlendioxidbehälter (41, 42, 43) verbunden ist, sodass in Schritt a) auch der dritte transportfähige Kohlendioxidbehälter (41, 42, 43) verbunden wird, in Schritt b) auch der dritte transportfähige Kohlendioxidbehälter (41, 42, 43) befüllt wird und in Schritt d) auch der dritte transportfähige Kohlendioxidbehälter (41, 42, 43) getrennt wird.

11. Verfahren zum Betreiben einer Zementanlage nach einem der Ansprüche 1 bis 3 und 5 bis 8 in Verbindung mit Anspruch 4, wobei das Verfahren die folgenden Schritte aufweist:
e) Verbringen eines leeren ersten transportfähigen Kohlendioxidbehälters (41) aus dem zweiten Lagerbereich (52) in den Befüllbereich (53),
f) Verbinden eines ersten transportfähigen Kohlendioxidbehälters (41) mit der Kohlendioxidseparationsvorrrichtung (20),
g) Befüllen des ersten transportfähigen Kohlendioxidbehälters (42) mit Kohlendioxids,
h) Trennen der Verbindung zwischen dem ersten transportfähigen Kohlendioxidbehälter (43) mit der Kohlendioxidseparationsvorrrichtung (20),
i) Verbringen des vollen ersten transportfähigen Kohlendioxidbehälters (43) aus dem Befüllbereich (53) in den ersten Lagerbereich (51).

12. Verfahren zum Betreiben einer Zementanlage nach einem der Ansprüche 1 bis 4 und 6 bis 8 in Verbindung mit Anspruch 5, wobei das Verfahren die folgenden Schritte aufweist:
j) Verbinden eines Reinkohlendioxidbehälters mit der Kohlendioxidseparationsvorrrichtung (20) und Betreiben der Kohlendioxidseparationsvorrrichtung (20) von reinem Kohlendioxid
oder
k) Verbinden eines Behälters für technisches Kohlendioxid mit der Kohlendioxidseparationsvorrrichtung (20) und Betreiben der Kohlendioxidseparationsvorrrichtung (20) von technischem Kohlendioxid.

13. Verfahren zum Betreiben einer Zementanlage nach einem der Ansprüche 1 bis 5 und 7 bis 8 in Verbindung mit Anspruch 6, wobei Kohlendioxid aus der Kohlendioxidseparationsvorrrichtung (20) und/oder dem Kohlendioxidspeichersystem (30) zur Beladestation und in der Beladestation in ein Fahrzeug gefördert wird.

14. Verfahren nach einem der Ansprüche 9 bis 13, **dadurch gekennzeichnet, dass** gefüllte transportfähige Kohlendioxidbehälter (41, 42, 43) auf Lastkraftwagen, Zug und/oder Schiff verladen werden.

15. Verfahren nach einem der Ansprüche 9 bis 14 in Verbindung mit Anspruch 8, **dadurch gekennzeichnet, dass** das Kohlendioxid zur Carbonatisierung von Altbeton genutzt wird.

## Claims

1. Cement plant, wherein the cement plant comprises a carbon dioxide separation device (20) for separating carbon dioxide from the exhaust gas, wherein the cement plant comprises a carbon dioxide storage system (30), wherein the carbon dioxide separation device (20) is connected to the carbon dioxide storage system (30) for transferring the separated carbon dioxide, wherein the carbon dioxide storage system (30) is modularly constructed from a plurality of transportable carbon dioxide containers (41, 42, 43), **characterised in that** the transportable carbon dioxide containers (41, 42, 43) are separably connectable individually or in groups to the carbon dioxide separation device (20), the transportable carbon dioxide containers (41, 42, 43) being combined in groups of 3 to 10 transportable carbon dioxide containers (41, 42, 43) which are interconnected.

2. Cement plant according to claim 1, **characterised in that** the transportable carbon dioxide containers (41, 42, 43) comply with ISO 668.

3. Cement plant according to one of the preceding claims, **characterised in that** all transportable carbon dioxide containers (41, 42, 43) have the same external dimensions and standardised connecting elements.

4. Cement plant according to one of the preceding claims, **characterised in that** the cement plant has a first storage area (51) for filled transportable carbon dioxide containers (43), wherein the cement plant has a second storage area (52) for empty transportable carbon dioxide containers (41), wherein the cement plant has a filling area (53), wherein the transportable carbon dioxide containers (41, 42, 43) in the filling area (52) can be connected to the carbon dioxide separation device (20).

5. Cement plant according to one of the preceding claims, **characterised in that** the carbon dioxide storage system (30) has a pure carbon dioxide container as a transportable carbon dioxide container (41, 42, 43) for a first purity grade of carbon dioxide and a container for technical carbon dioxide as a transportable carbon dioxide container (41, 42, 43) for a second purity grade of carbon dioxide.

6. Cement plant according to one of the preceding claims, **characterised in that** the cement plant has a loading station, the loading station being connected to the carbon dioxide storage system (30).

7. Cement plant according to one of the preceding claims, **characterised in that** the carbon dioxide storage system (30) is connected to further components for clinker production of the cement plant for the transfer of carbon dioxide.

8. Cement plant according to one of the preceding claims, **characterised in that** the cement plant has a device for processing waste concrete, wherein the carbon dioxide storage system (30) is connected to the device for processing waste concrete for the transfer of carbon dioxide.

9. A method of operating a cement plant according to any one of the preceding claims, the method comprising the following steps:
a) Connecting a first transportable carbon dioxide container (41, 42, 43) to the carbon dioxide separation device (20),
b) Filling the first transportable carbon dioxide container (41, 42, 43) with carbon dioxide,
c) Connecting a second transportable carbon dioxide container (41, 42, 43) to the carbon dioxide separation device (20),
d) Separating the connection between the first transportable carbon dioxide container (41, 42, 43) and the carbon dioxide separation device (20).

10. Method according to claim 9, **characterised in that** the first transportable carbon dioxide container (41, 42, 43) is connected to a third transportable carbon dioxide container (41, 42, 43), so that in step a) the third transportable carbon dioxide container (41, 42, 43) is also connected, in step b) the third transportable carbon dioxide container (41, 42, 43) is also filled and in step d) the third transportable carbon dioxide container (41, 42, 43) is also separated.

11. A method of operating a cement plant according to any one of claims 1 to 3 and 5 to 8 in conjunction with claim 4, wherein the method comprises the following steps:
e) Transferring an empty first transportable carbon dioxide container (41) from the second storage area (52) to the filling area (53),
f) Connecting a first transportable carbon dioxide container (41) to the carbon dioxide separation device (20),
g) Filling the first transportable carbon dioxide container (42) with carbon dioxide,
h) Separating the connection between the first transportable carbon dioxide container (43) and the carbon dioxide separation device (20),
i) Moving the full first transportable carbon dioxide container (43) from the filling area (53) into the first storage area (51).

12. A method of operating a cement plant according to any one of claims 1 to 4 and 6 to 8 in conjunction with claim 5, wherein the method comprises the following steps:
j) Connecting a pure carbon dioxide container to the carbon dioxide separation device (20) and operating the carbon dioxide separation device (20) from pure carbon dioxide
or
k) Connecting a container for technical carbon dioxide to the carbon dioxide separation device (20) and operating the carbon dioxide separation device (20) from technical carbon dioxide.

13. Method for operating a cement plant according to any one of claims 1 to 5 and 7 to 8 in conjunction with claim 6, wherein carbon dioxide is conveyed from the carbon dioxide separation device (20) and/or the carbon dioxide storage system (30) to the loading station and in the loading station into a vehicle.

14. Method according to one of claims 9 to 13, **characterised in that** filled transportable carbon dioxide containers (41, 42, 43) are loaded onto lorries, trains and/or ships.

15. Method according to one of claims 9 to 14 in conjunction with claim 8, **characterised in that** the carbon dioxide is used to carbonate old concrete.

## Revendications

1. Cimenterie, dans laquelle la cimenterie comprend un dispositif de séparation du dioxyde de carbone (20) pour séparer le dioxyde de carbone du gaz d'échappement, dans laquelle la cimenterie comprend un système de stockage du dioxyde de carbone (30), dans lequel le dispositif de séparation du dioxyde de carbone (20) est connecté au système de stockage du dioxyde de carbone (30) pour transférer le dioxyde de carbone séparé, dans lequel le système de stockage du dioxyde de carbone (30) est construit de manière modulaire à partir de plusieurs conteneurs de dioxyde de carbone transportables (41, 42, 43), **caractérisés par le fait que** les conteneurs de dioxyde de carbone transportables (41, 42, 43) peuvent être connectés individuellement ou en groupes au dispositif de séparation du dioxyde de carbone (20), les conteneurs de dioxyde de carbone transportables (41, 42, 43) étant combinés en groupes de 3 à 10 conteneurs de dioxyde de carbone transportables (41, 42, 43) qui sont interconnectés.

2. Cimenterie selon la revendication 1, **caractérisée par le fait que** les conteneurs transportables de dioxyde de carbone (41, 42, 43) sont conformes à la norme ISO 668.

3. Cimenterie selon l'une des revendications précédentes, **caractérisée par le fait que** tous les conteneurs de dioxyde de carbone transportables (41, 42, 43) ont les mêmes dimensions extérieures et des éléments de connexion standardisés.

4. Cimenterie selon l'une des revendications précédentes, **caractérisée par le fait que** la cimenterie possède une première zone de stockage (51) pour les conteneurs de dioxyde de carbone transportables remplis (43), dans laquelle la cimenterie possède une deuxième zone de stockage (52) pour les conteneurs de dioxyde de carbone transportables vides (41), dans laquelle la cimenterie possède une zone de remplissage (53), dans laquelle les conteneurs de dioxyde de carbone transportables (41, 42, 43) dans la zone de remplissage (52) peuvent être connectés au dispositif de séparation du dioxyde de carbone (20).

5. Cimenterie selon l'une des revendications précédentes, **caractérisée par le fait que** le système de stockage du dioxyde de carbone (30) comporte un conteneur de dioxyde de carbone pur en tant que conteneur de dioxyde de carbone transportable (41, 42, 43) pour un premier degré de pureté du dioxyde de carbone et un conteneur de dioxyde de carbone technique en tant que conteneur de dioxyde de carbone transportable (41, 42, 43) pour un deuxième degré de pureté du dioxyde de carbone.

6. Cimenterie selon l'une des revendications précédentes, **caractérisée par le fait que** la cimenterie possède une station de chargement, la station de chargement étant reliée au système de stockage du dioxyde de carbone (30).

7. Cimenterie selon l'une des revendications précédentes, **caractérisée par le fait que** le système de stockage du dioxyde de carbone (30) est connecté à d'autres composants pour la production de clinker de la cimenterie pour le transfert du dioxyde de carbone.

8. Cimenterie selon l'une des revendications précédentes, **caractérisée par le fait que** la cimenterie comporte un dispositif de traitement des déchets de béton, dans lequel le système de stockage du dioxyde de carbone (30) est relié au dispositif de traitement des déchets de béton pour le transfert du dioxyde de carbone.

9. Méthode d'exploitation d'une cimenterie selon l'une quelconque des revendications précédentes, la méthode comprenant les étapes suivantes :
a) Raccordement d'un premier conteneur transportable de dioxyde de carbone (41, 42, 43) au dispositif de séparation du dioxyde de carbone (20),
b) Remplir de dioxyde de carbone le premier conteneur transportable de dioxyde de carbone (41, 42, 43),
c) Raccorder un deuxième récipient transportable de dioxyde de carbone (41, 42, 43) au dispositif de séparation du dioxyde de carbone (20),
d) Séparation de la connexion entre le premier conteneur transportable de dioxyde de carbone (41, 42, 43) et le dispositif de séparation du dioxyde de carbone (20).

10. Procédé selon la revendication 9, **caractérisé par le fait que** le premier conteneur transportable de dioxyde de carbone (41, 42, 43) est relié à un troisième conteneur transportable de dioxyde de carbone (41, 42, 43), de sorte qu'à l'étape a) le troisième conteneur transportable de dioxyde de carbone (41, 42, 43) est également relié, à l'étape b) le troisième conteneur transportable de dioxyde de carbone (41, 42, 43) est également rempli et à l'étape d) le troisième conteneur transportable de dioxyde de carbone (41, 42, 43) est également séparé.

11. Méthode d'exploitation d'une cimenterie selon l'une des revendications 1 à 3 et 5 à 8 en liaison avec la revendication 4, dans laquelle la méthode comprend les étapes suivantes :
e) Transfert d'un premier conteneur de dioxyde de carbone transportable (41) vide de la deuxième zone de stockage (52) à la zone de remplissage (53),
f) Raccordement d'un premier conteneur transportable de dioxyde de carbone (41) au dispositif de séparation du dioxyde de carbone (20),
g) Remplir de dioxyde de carbone le premier conteneur transportable de dioxyde de carbone (42),
h) Séparation de la connexion entre le premier conteneur transportable de dioxyde de carbone (43) et le dispositif de séparation du dioxyde de carbone (20),
i) Déplacer le premier récipient transportable de dioxyde de carbone (43) plein de la zone de remplissage (53) vers la première zone de stockage (51).

12. Méthode d'exploitation d'une cimenterie selon l'une des revendications 1 à 4 et 6 à 8 en liaison avec la revendication 5, dans laquelle la méthode comprend les étapes suivantes :
j) Raccordement d'un récipient de dioxyde de carbone pur au dispositif de séparation du dioxyde de carbone (20) et fonctionnement du dispositif de séparation du dioxyde de carbone (20) à partir de dioxyde de carbone pur.
ou
k) Raccorder un conteneur de dioxyde de carbone technique au dispositif de séparation du dioxyde de carbone (20) et faire fonctionner le dispositif de séparation du dioxyde de carbone (20) à partir du dioxyde de carbone technique.

13. Méthode d'exploitation d'une cimenterie selon l'une des revendications 1 à 5 et 7 à 8 en liaison avec la revendication 6, dans laquelle le dioxyde de carbone est acheminé du dispositif de séparation du dioxyde de carbone (20) et/ou du système de stockage du dioxyde de carbone (30) vers la station de chargement et, dans la station de chargement, vers un véhicule.

14. Procédé selon l'une des revendications 9 à 13, **caractérisé par le fait que** les conteneurs de dioxyde de carbone transportables remplis (41, 42, 43) sont chargés sur des camions, des trains et/ou des navires.

15. Procédé selon l'une des revendications 9 à 14 en liaison avec la revendication 8, **caractérisé par le fait que** le dioxyde de carbone est utilisé pour carbonater l'ancien béton.
